# EUROPEAN PATENT SPECIFICATION

(11) **EP 1 803 345 B1**
(45) Date of publication and mention of the grant of the patent: **21.11.2012**
(21) Application number: 06256443.0
(22) Date of filing: 19.12.2006
(51) Int. Cl.: A01F 15/07

(54) **Tandem film dispenser holders in bale wrapper apparatus**
Tandem-Filmspenderhalter in Ballenwicklervorrichtung
Supports de débiteur de film en tandem dans un appareil d'emballage de balles

(30) Priority: 28.12.2005 GB 0526404
(43) Date of publication of application: 04.07.2007
(73) Proprietor: Kuhn-Geldrop B.V., 5667 KP Geldrop (NL)
(72) Inventor: van Amstel, Leonardus Hendrikus Maria, 5663 RW Geldrop (NL); van de Walle, Jacobus Izaak, 56674 SM Nuenen (NL)
(74) Representative: Raynor, Simon Mark

(56) References cited:
- EP-A1- 1 386 532
- EP-A1- 1 541 008
- WO-A-90/12737

## Description

This invention relates to a bale wrapper apparatus having at least two holders of stretch film wrapping and which are operative to dispense two lengths of stretch film to be applied as overlapping windings of film to wrap the outer surface and the two opposed end faces of an agricultural bale.

It is known to provide bale wrappers to wrap agricultural bales e.g. cylindrical bales or bales of rectangular cross-section, and composed of hay, straw or only partly dried crop (such as wet grass) to form silage, and such apparatus can be of the rotating turntable type, rotating satellite arm type, or can be incorporated in integrated baler/wrapper apparatus.

EP 1386532 A1 describes a bale wrapper having two or more rotating arms, each currying a roll of film. At least one of the arms is adjustable about a pivot axis relative to the other arm or arms, and can be moved to a retracted position after completion of a wrapping process to allow a wrapped bale to be unloaded from the bale wrapper.

It is important to ensure, as far as possible, that the wrapping applied to the bale is under tension to envelope the bale, and in a substantially air and watertight manner to prevent ingress of atmospheric air and water to the bale, and egress of gases and liquids from the bale in the case particularly of a wrapped crop which is fermenting to form silage.

A typical wrapping cycle applies successive helical windings of pre-stretched film around the bale, while the later is being rotated about its longitudinal axis, and to ensure that no lateral gaps are formed between adjacent windings (either during the wrapping process or during subsequent handling and storage of the wrapped bale), it is accepted practice that the relative speeds of rotation of the bale about its axis, and the linear speed of withdrawal of film from a film dispenser reel are set such that there is a substantial lateral overlap between successive windings e.g. not less than 30% overlap, and typically 50%.

A further problem in wrapping bales in a satisfactory manner arises in connection with the initial coverage of the outer surface of the bale. There is often present in the outer surface of the bale outwardly projecting stalky material, which is liable to puncture the initial layers of overlapping film winding applied to the bale, and this can cause undesired leakage paths for water or gas. Furthermore, with conventional methods of applying overlapping windings of stretch film to bales, each successive layer also runs the risk of being punctured by the stalky material which has punctured the initial layer or layers and projects outwardly therefrom, forming a protruding point which is able to puncture further layers of wrapping.

The suppliers of stretchable plastics film for wrapping bales have to provide a product which can a) undergo pre-stretching prior to application to the bale without tearing or other damage; b) be applied under tension as successive helical windings around the bale also substantially without damage; c) subsequently adjust itself to the shape of the bale after wrapping is completed and without any unacceptable puncturing of the film by any spiky material present on the outer surface of the bale; and d) withstand any tearing or puncturing during subsequent handling of the wrapped bale e.g, discharge of the wrapped bale onto the ground, which may comprise remaining stubble following harvesting of the crop.

The suppliers therefore also must be conservative in their manufacture of film, and normally provide a film of thickness which is sufficient to withstand worst case conditions. However, it is generally only the first covering layer or layers nearest to the bale surface which are likely to be exposed to the most risk of damage, and this means therefore that the film usage in forming intermediate layers may be greater than is required to provide an overall effective wrapping of a bale, when using current designs of bale wrapper apparatus supplying single length of film windings to cover the bale. Also, with existing wrapper techniques, the stretch ratio also has to be set conservatively.

The present invention has been developed with this problem in mind, and seeks to provide a solution to this problem by a unique arrangement of at least two separate holders for film dispensers which are relatively adjustable to supply at least partially laminated film as initial coverage of the bale during a wrapping cycle and having a first wrapping profile, and in which the wrapping cycle then includes subsequent relative adjustment of the holders to provide an overlying coverage layer(s) with a different wrapping profile.

According to the invention there is provided a bale wrapper apparatus for applying stretch film wrapping to an agricultural bale having an outer surface and a pair of opposed end faces and which comprises:
a table for supporting the bale with its longitudinal axis extending substantially parallel to the ground, and for rotating the bale generally about this axis during a wrapping cycle;
at least one holder arrangement for supporting a film dispenser arrangement to apply stretch film wrapping to cover the outer surface and the end faces of the bale; said holder arrangement comprising two holders each adapted to support a respective film dispenser and arranged to allow two lengths of film to be withdrawn from the dispensers and to be applied to the bale;
means for applying relative rotation between the table and the holder arrangement about a second axis extending substantially perpendicular to the longitudinal axis of the bale in order that successive windings of film can be applied to the bale; and
means for adjusting the positions of the two holders relative to each other during the wrapping cycle between first and second wrapping positions to convert the apparatus from a first wrapping mode to a second and/or further wrapping mode(s):
   in which the wrapping cycle of the apparatus is programmed such that;
      a) initial coverage of the bale is carried out with the holders in the first wrapping position such that the two lengths of film are brought into at least partial overlapping engagement, prior to, or at the moment of application as at least partly laminated windings to form an initial coverage layer covering the outer surface and the end faces of the bale and having a first wrapping profile; and
      b) the holders are thereafter adjusted to a second wrapping position in which the two lengths of film are applied to the initial coverage layer, to form an overlying coverage layer covering the outer surface and the end faces of the bale and having a different wrapping profile from the first wrapping profile of the initial coverage layer.

Therefore, apparatus according to the invention is able to apply at least part laminated film to provide the initial coverage of the bale, and which is able to resist strongly any possible puncturing of the film by stalky material projecting from the outer surface of the bale; however, the operating programme is set such that the holders are thereafter adjusted to their second wrapping position which provides any required different wrapping profile, and preferably in a pattern such that good airtightness can be achieved in the overlying layer(s). Because of the new wrapping technique the (actual) film can be stretched further (conventionally this would give more punctures) this higher (both in the first pattern and the second pattern) stretch will give higher tension (to give better air tightness and compression of the bale) and will lead to film savings (better use of the film).

Further preferred aspects of the apparatus according to the invention are defined in dependent claims 2 to 14.

Preferred embodiments of the invention will now be described in detail, by way of example only, with reference to the accompanying drawings, in which:
Figure 1 is a perspective and schematic illustration of a first embodiment of bale wrapper apparatus according to the invention;
Figure a is a similar view of a second embodiment according to the invention;
Figure 2 is a schematic side and plan view illustration of a first arrangement of pre-stretcher unit for use with the two separate film dispenser reel holders shown in the embodiment of Figure 1;

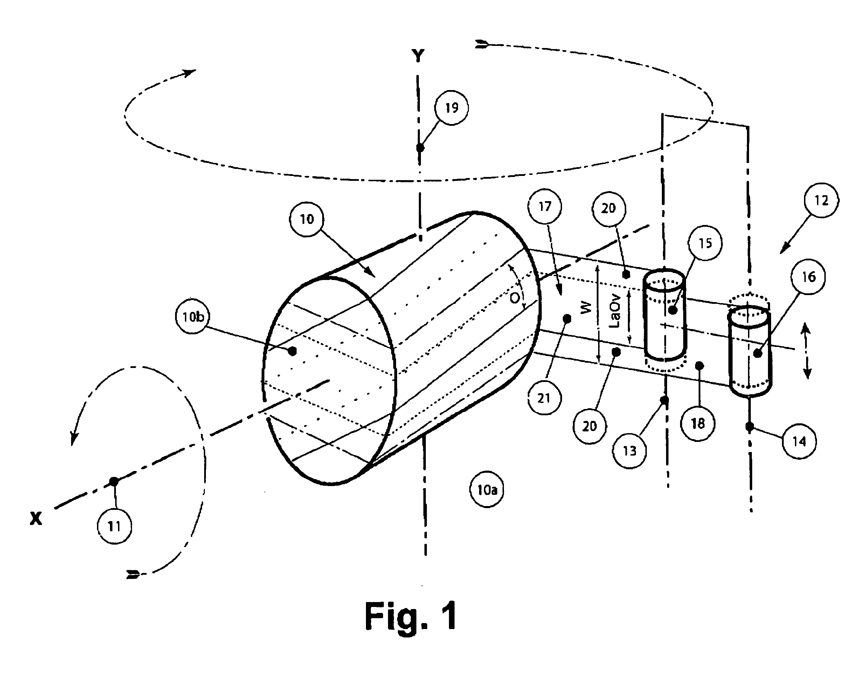

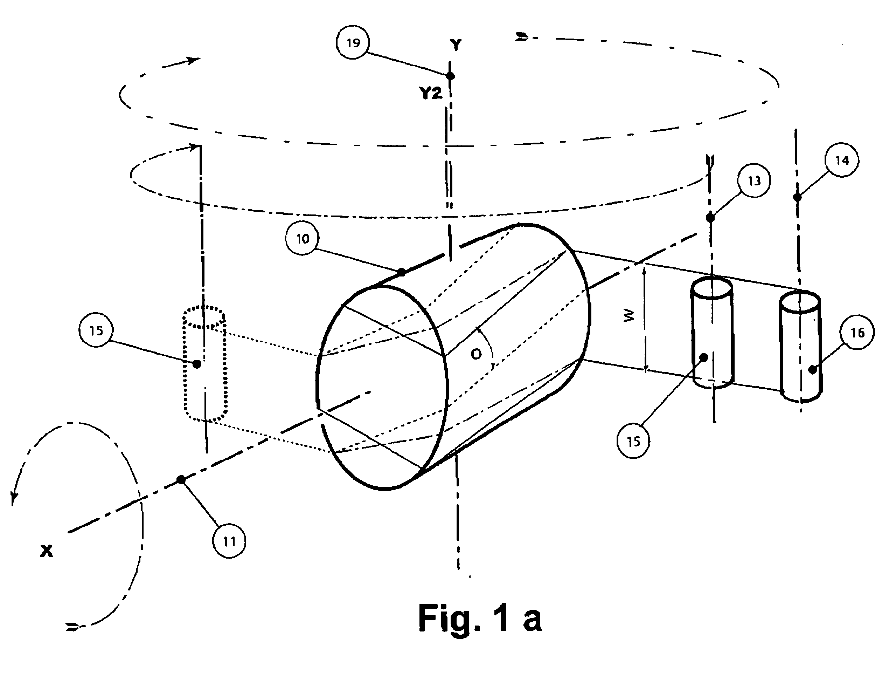

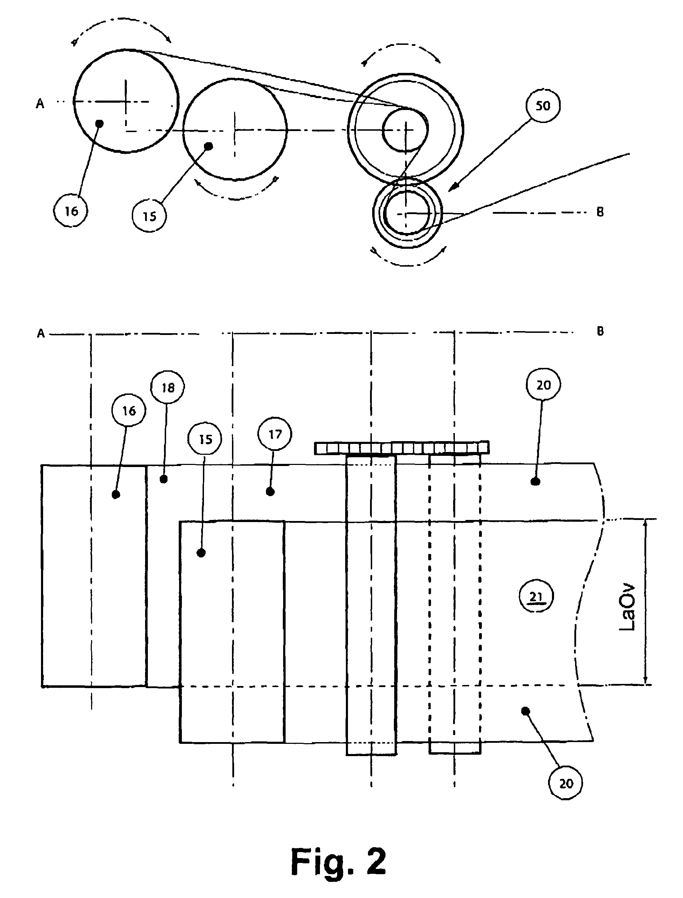

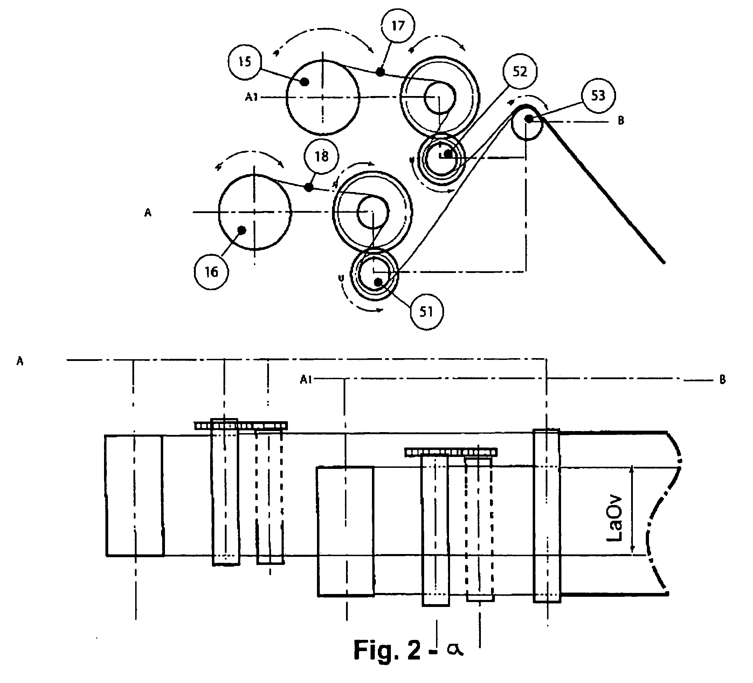

Figure 2-a is an illustration, similar to Figure 2, of an alternative arrangement of two separate pre-stretcher units, each associated with a respective film dispenser reel holder in the embodiment of Figure 1;

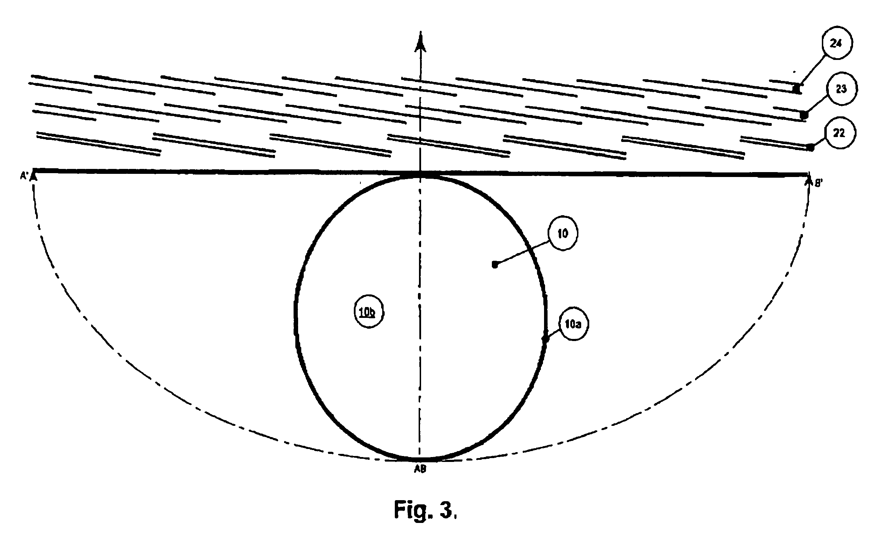

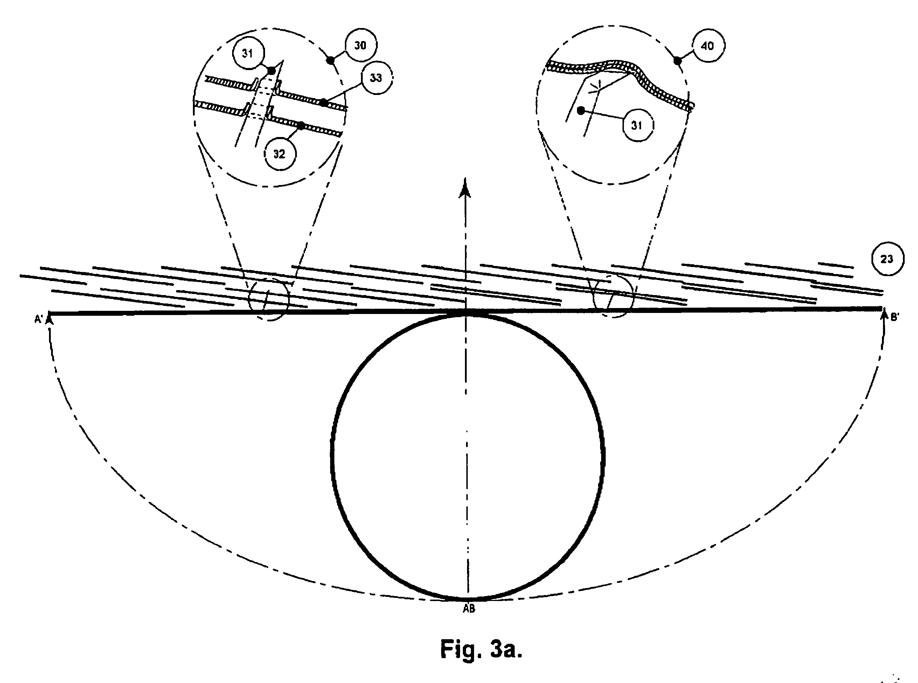

Figure 3 is a schematic illustration of the initial and subsequent stages of applying helical windings of film to the outer surface of a bale, using apparatus according to the embodiment of Figure 1a; and
Figure 3a is a view similar to Figure 3, but in which the right hand half of Figure 3a shows the pattern of winding coverage obtainable with apparatus according to the invention, and the left hand half shows a typical wrapping pattern obtaining using conventional bale wrapping apparatus.

Referring now to Figure 1 of the drawings, bale wrapper apparatus of the rotating turntable type, and satellite arm type will be well known to those of ordinary skill in the art, and therefore do not need to be described in detail herein. The schematically illustrated embodiments can be of the rotating turntable or satellite ann type, and therefore provide a table (not shown in detail) for supporting a hale 10 with its longitudinal axis 11 extending substantially parallel to the ground. The table rotates the bale 10 generally about its axis during a wrapping cycle.

A holder arrangement is provided, designated generally by reference 12, and which comprises two holders 13 and 14 each adapted to support a respective film dispenser reel 15, 16, and arranged to allow two lengths of film 17, 18 to be withdrawn from the dispensers 15, 16 respectively, and to be applied to the outer surface of the bale 10.

Means (not shown in detail) is provided to apply relative rotation between the bale 10 and the holder arrangement 12 about a second axis 19 which extends substantially perpendicular to the longitudinal axis 11 of the bale 10, in order that successive windings of film can be applied to the bale 10. This relative rotation about axis 19 can be achieved by providing a rotating turntable type apparatus, or by a rotating satellite arm type apparatus. In the latter case this may be incorporated in an integrated baler/wrapper apparatus.

There is also provided means (not shown) for adjusting the positions of the two holders 13, 14 relative to each other during the wrapping cycle between first and second wrapping positions, in order to convert the apparatus from a first wrapping mode to a second and/or further wrapping mode(s).

The apparatus of the invention is programmed so as to provide a wrapping cycle which comprises: a) initial coverage of the bale which is carried out with the holders 13, 14 in the first wrapping position, such that there is at least partial overlap of the two lengths of film 17, 18, and lamination of the overlapping portions to form at least part laminated film 21, prior to application of windings of the part laminated film 20, 21 to form the initial coverage of the bale. This provides a first wrapping profile of the initial coverage layer 22 on the outer surface of the bale, and by virtue of the fact that the wrapping is formed at least partly of laminated film 21, having double thickness, this provides strong resistance to possible puncturing of the film by any stalky material present in the outer surface of the bale.

However, thereafter, the programme controls the operation of the wrapping cycle such that the holders 13, 14 are relatively adjusted to a second wrapping position, in which a different wrapping profile is provided in the further coverage layer(s) applied as overlying layers to the initial coverage layer.

In the example of Figure 1, the holders 13 and 14 are relatively adjusted axially of the dispensers 15, 16, so as to provide lesser overlap between the two lengths of film 17, 18, to form a smaller width part laminated film, prior to application of such smaller width part laminated film as an overlying layer or layers on the initial coverage layer of the bale.

In an alternative embodiment of the invention, as shown in Figure 1a, parts corresponding with those already described are given the same reference numerals, and will not be described in detail again. However, in this embodiment, the film dispensers 15 and 16 are shown in full lines in the first wrapping position, in which there is 100% overlap of the films, prior to application to the outer surface and end faces of the bale. This provides the initial coverage layer on the bale, as described above.

However, the subsequent adjustment of the holders 13, 14, under the programmed control provided in the wrapping cycle, results in orbital movement of the holder 13 through approximately 180° about the axis 19, whereby the dispenser 15 takes up the second relative wrapping position shown in dotted outline in Figure 1a.

Evidently, after adjustment to this second wrapping position, separate lengths of film are withdrawn from the dispensers 15 and 16 and applied as single film overlapping windings forming a coverage layer or layers on the initial coverage layer.

The general concept of the invention (as described with reference to the embodiments of Figures 1, and Figure 1a will become apparent from a more detailed description below of a typical pattern of winding coverage of a bale which can be achieved by apparatus of Figure 1a, and as described with reference to Figures 3 and 3a of the drawings.

Referring therefore to Figure 3 of the drawings, this is a schematic illustration of the application of successive layers of film wrapping to cover the outer surface 10a, and the opposed end faces 10b of a cylindrical bale 10. The first layer of coverage i.e. the initial coverage of the bale is obtained by application of double thickness laminated film i.e. 100% overlap between film reel holders 13 and 14, with this first layer of coverage being designated generally by reference 22 and having a first wrapping profile. This is obtained when the holders 13 and 14 have been adjusted to the first wrapping position shown in Figure 1a, sufficient to provide required overlap between the two lengths of film 17 and 18, to form double thickness laminated film (21) forming the first layer 22. Evidently, holders 13 and 14, as shown in the full line position in the embodiment of Figure 1, will have to be adjusted to a position in which they are at the same level (not shown) so that 100% overlap can be obtained.

However, it should be understand that it is within the scope of this claimed invention for the initial layer of coverage 22 to be provided by laminated film which is only partly overlapping i.e. there is a main portion of double film thickness, and one or possibly two side portions of single thickness (see central laminated film portion 21 and two single film side portions 20 of Figure 1).

The programme of the apparatus is set such that, when the initial coverage layer 22 has been formed, (which will usually be during one half revolution of the bale 10 about its axis), relative adjustment is made to the positions of the holders 13 and 14, so as to provide a lesser amount of overlap between the lengths of film 17 and 18.

In the illustrated arrangement of Figure 3, there arc shown two overlying layers of laminated film 23 and 24, each composed of laminated film with approximately 50% overlap. With such an arrangement, there can be seen clearly that there are six layers of film coverage, at any point on the outer circumference of the bale, and this is obtained during three complete half revolutions of the bale 10 (half a bale turn gives full coverage of the bale). The first two layers are achieved with 100% overlap, in initial coverage layer 22, and then the two subsequent, layers 23 and 24 provide four layers of coverage at any point on the outer surface of the bale, comprising four laminated films at approximately 50% overlap.

Evidently, the overlying layer(s) 23, 24 can be formed with other wrapping profile, different from the first profile of the first coverage layer 22. The first layer has double thickness to resist puncture, whereas the different profile of the overlying layer(s) can be arranged so as to achieve optimum gas/liquid leakage resistance.

It should be understood that it is not essential to reduce from 100% to 50% overlap, and other arrangements of reduction in overlap between initial coverage, and subsequent layer(s) of coverage can be provided within the scope of this invention.

Referring now to Figure 3a, this is generally similar to Figure 3, but shows in the right hand half the laminated wrapping pattern achieved by the apparatus of Figure 1a, and as shown in Figure 3, whereas the left hand half shows a typical wrapping pattern of overlapping windings of film (not laminated prior to application).

The left hand half of Figure 3a shows that any spiky material present on the outer surface of the bale, as shown diagrammatically by detail 30, can relatively easily puncture single film thicknesses of film windings as they are applied in helically overlapping manner by conventional apparatus. Evidently, projecting stalk 31 can puncture first single film thickness winding 32, and then be projecting outwardly therefrom to puncture successively applied single film thickness winding 33.

By contrast, the greater strength of thc double thickness laminated film in the first coverage layer 22 is better able to resist a puncturing by the stalky material 31, as shown in detail 40 in the right hand half of Figure 3a. Such stalky material 31 is therefore contained by the strongly resistant first laminated film layer 22, and it is therefore acceptable for the subsequently applied layers of film wrapping to be single windings of film at suitable overlap between successive windings, which in the illustrated arrangement comprise 50% overlap in the case of the embodiment Figure 1a.

It will be understood that this will be achieved by relative rotational separation of the holders 13 and 14 so that no lamination takes place between the two lengths of film 17 and 18, prior to application onto the bale, in the example of Figure 1a. However, in the example of Figure 1, the overlying coverage layer(s) is obtained following relative vertical adjustment of the holders 13, 14, to provide overlap from zero up to less than the extent of overlap in the initial coverage layer 22.

Referring now to Figure 2, this shows the provision of a common pre-stretcher unit 50 which pre-stretches the laminated film derived from supply of the two lengths of film 17 and 18 from the dispenser reels 15 and 16 respectively. This is preferably provided with the apparatus as shown in Figure 1.

As an alternative, as shown in Figure 2a, each film dispenser 15,16 may have its own pre-stretcher unit associated therewith, to apply pre-stretching to the lengths of film 17 and 18, prior to being brought into laminating contact and then to the outer surface of the bale. Figure 2a shows pre-stretcher units 51 and 52 acting on lengths of film 17,18 individually, prior to the pre-stretched film undergoing lamination at laminating point 53. This arrangement may also be adopted in apparatus as shown in Figure 1.

It will be evident that there has been described above an arrangement of holders 13,14, which arc relatively adjustable between first and second wrapping positions, by simple relative height adjustment between the two holders. However, it is within the scope of the invention for an alternative means of adjustment to be provided, as shown in Figure 1a. Corresponding parts are given the same reference numerals, and will not be described in detail again. Also, if required, more than one pair of holders 13, 14 may be provided. If two pairs of holders are provided, then the relative circumferential adjustment to the second wrapping position will be approximately 90°.

In Figure 1a, the holders 13,14 and dispenser reels 15,16, are shown in full lines in the first wrapping position, in which there is 100% overlap, and a double thickness laminated film (throughout its width W) is provided, prior to application to the bale 10. However, after the initial coverage of double thickness laminated film (first coverage layer 22), the program of the apparatus is set such that the holders 13,14 are relatively displaced circumferentially of the bale, and showing the second wrapping position in which dispenser reel 15 takes up the position shown in dotted outline in Figure 1a. Therefore, in the embodiment of Figure 1a, there is lamination between the two lengths of film delivered by dispenser reels 15,16 during the first half rotation of the bale 10 about its axis 11, when the double thickness initial coverage layer is formed. Thereafter, after dispenser reel 15 moves to the second wrapping position, further layers of coverage 23,24 of overlapping windings of film (single thickness) are applied to the initial double layer laminated film coverage 22.

Preferably, the stretch level is more than 90% in at least one of the initial and further coverage layers. Also, the "laminating parts of the successive windings" connect or partly overlap in the patterns of the layers.

In order to economise on film usage, the film thickness actually applied as covering to the bale could be less than current minimum thickness in existing film wrapping techniques (17 microns), provided that the laminated part of each winding is thicker than this minimum (single) film thickness. Preferably, the thickness of the laminated part is at least 20 micron.

The thinness of (single) film below 17 microns could be achieved (a) by using thinner film (prior to pre-stretching at stretch level of 70%; i.e. the original run length is pre-stretched to 170%) or (b) preferably using a starting film thickness of 25 micron and a higher stretch level of 90% or more.

Especially advantageous is to use a stretch level of about 120%, since there could then be obtained 6 layers of coverage using the same amount of film as starting material as could give only 4 layers of coverage with a stretch level of about 70%.

The laminated parts of the windings will not only increase the puncture resistance, but a 6 layer coverage pattern will increase the tightness of the wrapped bale.

## Claims

1. A bale wrapper apparatus for applying stretch film wrapping to an agricultural bale (10) having an outer surface (10a) and a pair of opposed end faces (10b) and which comprises:
a table for supporting the bale (10) with its longitudinal axis (11) extending substantially parallel to the ground, and for rotating the bale generally about this axis during a wrapping cycle;
at least one holder arrangement (12) for supporting a film dispenser arrangement (15, 16) to apply stretch film wrapping (17, 18) to cover the outer surface (10a) and the end faces (10b) of the bale (10), said holder arrangement comprising two holders (13, 14) each adapted to support a respective film dispenser (15, 16) and arranged to allow two lengths of film (17, 18) to be withdrawn from the dispensers (15, 16) and to be applied to the bale (10);
means for applying relative rotation between the table and the holder arrangement (12) about a second axis (19) extending substantially perpendicular to the longitudinal axis (11) of the bale (10) in order that successive windings of film can be applied to the bale; and
means for adjusting the positions of the two holders (13, 14) relative to each other during the wrapping cycle between first and second wrapping positions to convert the apparatus from a first wrapping mode to a second and/or further wrapping mode(s):
**characterised in that** the wrapping cycle of the apparatus is programmed such that;
a) initial coverage (22) of the bale (10) is carried out with the holders (13, 14) in the first wrapping position such that the two lengths of film (17, 18) are brought into at least partial overlapping engagement (21), prior to, or at the moment of application as at least partly laminated windings of the bale (10) to form an initial coverage layer (22) covering the outer surface and the end faces of the bale and having a first wrapping profile; and
b) the holders (13, 14) are thereafter adjusted to a second wrapping position in which the two lengths of film (17, 18) are applied to the initial coverage layer (22), to form an overlying coverage layer (23, 24) covering the outer surface and the end faces of the bale and having a different wrapping profile from the first wrapping profile of the initial coverage layer (22).

2. Apparatus according to claim 1, in which the second relative wrapping position of the two holders (13, 14) provides partial overlap lamination of the two lengths of film (17, 18), prior to application of the overlying coverage layer (23, 24), and to a lesser extent of overlap than in the first wrapping profile of the initial coverage layer (22).

3. Apparatus according to claim 2, in which the holders (13, 14) are relatively adjustable axially of the dispensers (15, 16) between the first and second wrapping positions.

4. Apparatus according to claim 1, in which the second relative wrapping position of the two holders (13, 14) comprises a circumferentially spaced apart position with respect to the bale (10), such that separate lengths of film (17, 18) are withdrawn from the dispensers (15, 16) to form overlapping windings on the initial coverage layer (22).

5. Apparatus according to claim 4, in which the holders (13, 14) are located adjacent to one another, in the first wrapping position, so that at least partial laminating overlap of the two lengths of film (17, 18) takes place before application to the bale (10), and the holders (13, 14) are relatively adjustable circumferentially to generally diametrically opposed positions in the second wrapping position.

6. Apparatus according to claim 5, in which the holder arrangement (12) comprises two pairs of holders (13, 14), and in which the holders in each pair are relatively adjustable circumferentially through approximately 90° between the first wrapping position and the second wrapping position.

7. Apparatus according to any one of the preceding claims, in which the two holders (13, 14) are arranged to provide 100% overlap of the two lengths of film (17, 18), in the first wrapping position.

8. Apparatus according to any one of the preceding claims, in which each holder (13, 14) has a respective pre-stretcher unit (51,52) associated therewith.

9. Apparatus according to any one of claims 1 to 3, in which a common pre-stretcher unit (50) is provided, to act on the two lengths of film (17, 18) together, when the first wrapping profile is required.

10. Apparatus according to any one of the preceding claims, and programmed to provide two overlying coverage layers (23, 24) and having the second wrapping profile.

11. Apparatus according to any one of the preceding claims in which the stretch level applied to the film from each dispenser, and prior to application as the initial and/or further coverage layer(s) is more than 90%.

12. Apparatus according to any one of the preceding claims, in which the laminating 5 parts of the successive windings connect or overlap in the patterns of the layer (s).

13. Apparatus according to claim 12, including a pre-stretcher unit operative to apply stretch level of up to 120% to the film, prior to application to the bale.

14. Apparatus according to any one of the preceding claims, and operative to provide laminated paths of the windings of thickness at least 20 microns.

## Patentansprüche

1. Ballenwickelvorrichtung zum Aufbringen einer Dehnfolienumhüllung auf einen landwirtschaftlichen Ballen (10), der eine Außenfläche (10a) und ein Paar einander entgegengesetzter Endseitenflächen (10b) hat, und die Folgendes aufweist:
einen Tisch zum Tragen des Ballens (10), wobei sich seine Längsachse (11) im Wesentlichen parallel zum Boden erstreckt, und zum Drehen des Ballens während eines Wickelzyklus allgemein um diese Achse,
wenigstens eine Halteranordnung (12) zum Tragen einer Folienabgabeanordnung (15, 16) zum Aufbringen der Dehnfolienumhüllung (17, 18), um die Außenfläche (10a) und die Endseitenflächen (10b) des Ballens (10) zu bedecken, wobei die genannte Halteranordnung zwei Halter (13, 14) umfasst, die jeweils zum Tragen einer jeweiligen Folienabgabevorrichtung (15, 16) ausgeführt sind und so angeordnet sind, dass zwei Folienstücke (17, 18) von den Abgabevorrichtungen (15, 16) abgezogen und auf den Ballen (10) aufgebracht werden können,
Mittel zum Anwenden relativer Drehung zwischen dem Tisch und der Halteranordnung (12) um eine zweite Achse (19), die sich im Wesentlichen lotrecht zur Längsachse (11) des Ballens (10) erstreckt, so dass aufeinanderfolgende Folienwicklungen auf den Ballen aufgebracht werden können, und
Mittel zum Einstellen der Position der zwei Halter (13, 14) während des Wickelzyklus relativ zueinander zwischen einer ersten und einer zweiten Wickelposition, um die Vorrichtung von einer ersten Wickelbetriebsart auf eine zweite und/oder weitere Wickelbetrieb(sarten) umzustellen:
**dadurch gekennzeichnet, dass** der Wickelzyklus der Vorrichtung so programmiert ist, dass:
a) die anfängliche Abdeckung (22) des Ballens (11) mit den zwei Haltern (13, 14) in der ersten Wickelposition durchgeführt wird, so dass die zwei Folienstücke (17, 18) vor oder im Augenblick der Aufbringung als wenigstens teilweise geschichtete Wicklungen des Ballens (10) in wenigstens teilüberlappende Anlage aneinander gebracht werden, um eine anfängliche Decklage (22) zu bilden, welche die Außenfläche und die Endseitenflächen des Ballens bedeckt und ein erstes Wickelprofil hat, und
b) die Halter (13, 14) danach auf eine zweite Wickelposition eingestellt werden, in welcher die zwei Folienstücke (17, 18) auf die anfängliche Decklage (22) aufgebracht werden, um eine überlagernde Decklage (23, 24) zu bilden, welche die Außenfläche und die Endseitenflächen des Ballens bedeckt und ein gegenüber dem ersten Wickelprofil der anfänglichen Decklage (22) anderes Wickelprofil hat.

2. Vorrichtung nach Anspruch 1, wobei die zweite relative Wickelposition der zwei Halter (13, 14) eine teilweise Überlappungsschichtung der zwei Folienstücke (17, 18) vor Aufbringung der überlagernden Decklage (23, 24) und in einem kleineren Überlappungsausmaß als bei dem ersten Wickelprofil der anfänglichen Decklage (22) bereitstellt.

3. Vorrichtung nach Anspruch 2, wobei die Halter (13, 14) zwischen der ersten und der zweiten Wickelposition axial zu den Abgabevorrichtungen (15, 16) relativ einstellbar sind.

4. Vorrichtung nach Anspruch 1, wobei die zweite relative Wickelposition der zwei Halter (13, 14) eine in Umfangsrichtung in Bezug auf den Ballen (10) beabstandete Position aufweist, so dass separate Folienstücke (17, 18) von den Abgabevorrichtungen (15, 16) abgezogen werden, um überlappende Wicklungen auf der anfänglichen Decklage (22) zu bilden.

5. Vorrichtung nach Anspruch 4, wobei die Halter (13, 14) sich in der ersten Wickelposition nebeneinander befinden, so dass vor Aufbringung auf den Ballen (10) eine wenigstens teilweise geschichtete Überlappung der zwei Folienstücke (17, 18) stattfindet, und die Halter (13, 14) in der zweiten Wickelposition in Umfangsrichtung relativ auf allgemein diametral entgegengesetzte Positionen einstellbar sind.

6. Vorrichtung nach Anspruch 5, wobei die Halteranordnung (12) zwei Paare von Haltern (13, 14) aufweist und wobei die Halter in jedem Paar in Umfangsrichtung um etwa 90° zwischen der ersten Wickelposition und der zweiten Wickelposition relativ einstellbar sind.

7. Vorrichtung nach einem der vorhergehenden Ansprüche, wobei die zwei Halter (13, 14) in der ersten Wickelposition so angeordnet sind, dass sie eine 100-prozentige Überlappung der zwei Folienstücke (17, 18) ergeben.

8. Vorrichtung nach einem der vorhergehenden Ansprüche, wobei jeder Halter (13, 14) eine jeweilige ihm zugeordnete Vordehneinheit (51, 52) aufweist.

9. Vorrichtung nach einem der Ansprüche 1 bis 3, wobei eine gemeinsame Vordehneinheit (50) bereitgestellt ist, um auf die zwei Folienstücke (17, 18) zusammen zu wirken, wenn das erste Wickelprofil erwünscht ist.

10. Vorrichtung nach einem der vorhergehenden Ansprüche, die zum Bereitstellen zweier überlagernder Decklagen (23, 24) programmiert ist und das zweite Wickelprofil hat.

11. Vorrichtung nach einem der vorhergehenden Ansprüche, wobei der von jeder Abgabevorrichtung auf die Folie und vor der Aufbringung als anfängliche und/oder weitere Decklage(n) ausgeübte Dehnungsgrad mehr als 90 % beträgt.

12. Vorrichtung nach einem der vorhergehenden Ansprüche, wobei die geschichteten Teile der aufeinanderfolgenden Wicklungen in den Mustern der Lage(n) miteinander verbunden sind oder einander überlappen.

13. Vorrichtung nach Anspruch 12, die eine Vordehneinheit aufweist, welche die Aufgabe hat, einen Dehnungsgrad von bis zu 120 % auf den Film, vor der Aufbringung auf den Ballen, auszuüben.

14. Vorrichtung nach einem der vorhergehenden Ansprüche und funktionell zum Bereitstellen geschichteter Wege der Wicklungen mit einer Dicke von wenigstens 20 Mikrometern.

## Revendications

1. Appareil d'emballage de balles destiné à l'application d'un film d'emballage étirable à une balle agricole (10) possédant une surface extérieure (10a) et une paire de faces d'extrémité opposées (10b) et qui comprend :
une table destinée à soutenir la balle (10) avec son axe longitudinal (11) s'étendant sensiblement parallèlement au sol, et destinée à faire pivoter la balle généralement autour de cet axe au cours d'un cycle d'emballage,
au moins un agencement de support (12) destiné à soutenir un agencement de distributeur de film (15, 16) destiné à appliquer un emballage étirable (17, 18) de façon à couvrir la surface extérieure (10a) et les faces d'extrémité (10b) de la balle (10), ledit agencement de support comprenant deux supports (13, 14), chacun d'eux étant adapté de façon à soutenir un distributeur de film respectif (15, 16) et agencé de façon à permettre à deux longueurs de film (17, 18) d'être prélevées des distributeurs (15, 16) et d'être appliquées à la balle (10),
un moyen d'application d'une rotation relative entre la table et l'agencement de support (12) autour d'un deuxième axis (19) s'étendant sensiblement perpendiculairement à l'axe longitudinal (11) de la balle (10) de sorte que des enroulements successifs de film puissent être appliqués à la balle, et
un moyen d'ajustement des positions des deux supports (13, 14) l'un par rapport à l'autre au cours du cycle d'emballage entre la première et la deuxième positions d'emballage de façon à convertir l'appareil d'un premier mode d'emballage vers un deuxième et/ou d'autres mode(s) d'emballage :
**caractérisé en ce que** le cycle d'emballage de l'appareil est programmé de sorte que :
a) une couverture initiale (22) de la balle (10) soit effectuée avec les supports (13, 14) dans la première position d'emballage de sorte que les deux longueurs de film (17, 18) soient placées en une mise en prise en chevauchement au moins partiel (21), avant ou au moment de l'application sous la forme d'enroulements de la balle au moins partiellement stratifiés (10) de façon à former une couche de couverture initiale (22) recouvrant la surface extérieure et les faces d'extrémité de la balle et possédant un premier profil d'enroulement, et
b) les supports (13, 14) sont ensuite ajustés à une deuxième position d'emballage dans laquelle les deux longueurs de film (17, 18) sont appliquées à la couche de couverture initiale (22), de façon à former une couche de couverture sus-jacente (23, 24) recouvrant la surface extérieure et les faces d'extrémité de la balle et possédant un profil d'enroulement différent du premier profil d'enroulement de la couche de couverture initiale (22).

2. Appareil selon la Revendication 1, dans lequel la deuxième position d'emballage relative des deux supports (13, 14) fournit une stratification à chevauchement partiel des deux longueurs de film (17, 18), avant application de la couche de couverture sus-jacente (23, 24), et avec une étendue de chevauchement moindre que dans le premier profil d'enroulement de la couche de couverture initiale (22).

3. Appareil selon la Revendication 2, dans lequel les supports (13, 14) sont ajustables de manière relative axialement aux distributeurs (15, 16) entre la première et deuxième positions d'emballage.

4. Appareil selon la Revendication 1, dans lequel la deuxième position d'emballage relative des deux supports (13, 14) comprend une position circonférentiellement espacée par rapport à la balle (10), de sorte que des longueurs de film distinctes (17, 18) soient prélevées des distributeurs (15, 16) de façon à former des enroulements en chevauchement sur la couche de couverture initiale (22).

5. Appareil selon la Revendication 4, dans lequel les supports (13, 14) sont situées de manière adjacente l'un à l'autre, dans la première position d'emballage, de sorte qu'un chevauchement de stratification au moins partiel des deux longueurs de film (17, 18) se produise avant application à la balle (10), et les supports (13, 14) sont ajustables de manière relative circonférentiellement à des positions généralement diamétralement opposées positions dans la deuxième position d'emballage.

6. Appareil selon la Revendication 5, dans lequel l'agencement de support (12) comprend deux paires de supports (13, 14), et dans lequel les supports de chaque paire sont ajustables de manière relative, circonférentiellement sur approximativement 90° entre la première position d'emballage et la deuxième position d'emballage.

7. Appareil selon l'une quelconque des Revendications précédentes, dans lequel les deux supports (13, 14) sont agencés de façon à fournir un chevauchement à 100% des deux longueurs de film (17, 18) dans la première position d'emballage.

8. Appareil selon l'une quelconque des Revendications précédentes, dans lequel chaque support (13, 14) possède une unité de pré-étirement respective (51, 52) associée à celui-ci.

9. Appareil selon l'une quelconque des Revendications 1 à 3, dans lequel une unité de pré-étirement commune (50) est fournie, destinée à agir sur les deux longueurs de film (17, 18) conjointement lorsque le premier profil d'enroulement est requis.

10. Appareil selon l'une quelconque des Revendications précédentes, et programmé de façon à fournir deux couche de couverture sus-jacentes (23, 24) et possédant le deuxième profil d'enroulement.

11. Appareil selon l'une quelconque des Revendications précédentes, dans lequel le niveau d'étirement appliqué au film provenant de chaque distributeur, et avant application en tant que couche(s) de couverture initiale et/ou suivante(s) est supérieur à 90%.

12. Appareil selon l'une quelconque des Revendications précédentes, dans lequel les parties de stratification des enroulements successifs se relient ou se chevauchent dans les motifs des couches.

13. Appareil selon la Revendication 12, comprenant une unité de pré-étirement conçue de façon à appliquer un niveau d'étirement jusqu'à 120% au film, avant application à la balle.

14. Appareil selon l'une quelconque des Revendications précédentes, et conçu de façon à fournir des trajets stratifiés des enroulements d'une épaisseur d'au moins 20 microns.
